# EUROPÄISCHE PATENTSCHRIFT

(11) **EP 2 381 655 B1**
(45) Veröffentlichungstag und Bekanntmachung des Hinweises auf die Patenterteilung: **27.06.2012**
(21) Anmeldenummer: 10160499.9
(22) Anmeldetag: 20.04.2010
(51) Int. Cl.: H04M 1/02

(54) **Kommunikationseinrichtung**
Communication device
Dispositif de communication

(43) Veröffentlichungstag der Anmeldung: 26.10.2011
(73) Patentinhaber: Kreiner, Werner Richard, 94365 Parkstetten (DE)
(72) Erfinder: Kreiner, Werner Richard, 94365 Parkstetten (DE)
(74) Vertreter: Prüfer & Partner GbR European Patent Attorneys

(56) Entgegenhaltungen:
- WO-A1-2006/135106
- DE-A1-102005 051 391
- DE-U1- 29 702 769
- GB-A- 2 377 582
- GB-A- 2 450 332
- US-A1- 2007 270 176
- US-B1- 6 324 261

## Beschreibung

Die Erfindung betrifft eine Kommunikationseinrichtung nach dem Oberbegriff des Patentanspruchs 1.

Aus dem Stand der Technik sind eine Vielzahl von Kommunikationseinrichtungen, z.B. Türsprechanlagen bekannt. So ist beispielsweise eine Türsprechanlage bekannt, bei der ein Telekommunikationsadapter an ein Telefonfestnetz angeschlossen ist. Mittels des Telekommunikationsadapters kann bei einem Betätigen der Türsprechanlage eine Rufweiterschaltung auf ein Festnetztelefon oder ein Handy erfolgen. In dem Telekommunikationsadapter ist die Zielrufnummer hinterlegt, die bei einem Betätigen der Türsprechanlage angewählt werden soll. Im Ergebnis kann eine Kommunikationsverbindung zwischen der Türsprechanlage und dem Festnetztelefon bzw. Handy aufgebaut werden. Die Kommunikationsverbindung kann gemäß dem Session Initiation Protocol (SIP) bei Voice over IP oder jeglichem anderen geeigneten Protokoll aufgebaut werden.

Ein Nachteil der bekannten Türsprechanlage besteht darin, dass ein Telekommunikationsadapter benötigt wird, der in die Elektroinstallation der Türsprechanlage eingebaut werden muss. Dieser Einbau ist zeitaufwendig und resultiert in höheren Kosten für die Türsprechanlage.

US 2007/0270176 A1 offenbart eine gattungsgemäße Kommunikationseinrichtung mit einem Gehäuse und mindestens einem am Gehäuse vorgesehenen Tastenelement. Im Gehäuse ist ein Prozessor mit einer Datenübertragungseinrichtung angebracht.

DE 10 2005 051 391 A1 offenbart ein Funkmodul, welches ggf. im Mobilfunkbetrieb betrieben werden kann. GB-2, 377, 582 A offenbart eine Technik, bei der ein Mobiltelefon an der Seite im Wohnrauminneren einer Tür angebracht und durch Kabel mit einem Kasten verbunden ist, der an der Seite außerhalb der Wohnung angebracht ist. Eine ähnliche Technik ist in der GB-2,250,332 A offenbart.

Eine Aufgabe der vorliegenden Erfindung besteht darin, eine Kommunikationseinrichtung bereitzustellen, mittels der eine Sprach- oder Videoverbindung zwischen einer Kommunikationsannahmestelle, wie z.B. einer Türsprechanlage und einem Festnetztelefon bzw. Handy oder einem IP basierenden Kommunikationsserver aufgebaut werden kann und gleichzeitig die Kosten für die Kommunikationsannahmestelle gering sind.

Die Aufgabe wird durch den Gegenstand des Patentanspruchs 1 gelöst. Vorteilhafte Ausgestaltungen der Erfindung sind Gegenstand der abhängigen Ansprüche.

Ein Vorteil der Erfindung besteht darin, dass lediglich ein Mobiltelefon innerhalb eines mobilen oder stationären Gehäuses oder auch eines vorhandenen Briefkastens der Kommunikationseinrichtung angeordnet ist. Das Mobiltelefon ist derart innerhalb des Gehäuses angeordnet, dass bei einer Betätigung eines am Gehäuse angebrachten Tastenelements, wie beispielsweise einer Türklingel, eine Funktion des Mobiltelefons, wie beispielsweise eine Kurzwahlfunktion, ausgeführt wird. Als eine weitere Funktion des Mobiltelefons kann beispielsweise ein Aufbau einer Kommunikationsverbindung zwischen dem Mobiltelefon und damit der Kommunikationseinrichtung und einem Festnetztelefon oder einem Handy angesehen werden. Die Kommunikationsverbindung kann gemäß dem Session Initiation Protocol (SIP) bei Voice over IP oder jeglichem anderen geeigneten Protokoll aufgebaut werden. Im Ergebnis kann durch das Vorsehen des Mobiltelefons auf einen bekannten Telekommunikationsadapter und damit auf eine zeitaufwendige Einbauinstallation eines zusätzlichen Bauteils verzichtet werden. Somit verringern sich die Einbaukosten und damit die Kosten für die Kommunikationseinrichtung trotz einer erweiterten Funktionalität. Des Weiteren ist durch die erfindungsgemäße Kommunikationseinrichtung eine einfache Zugangskontrolle möglich.

Ein Vorteil einer Kommunikationsverbindung zwischen dem Festnetztelefon bzw. dem Handy und der Kommunikationseinrichtung besteht darin, dass die sich im Wohnhaus befindliche Person nicht mehr zu einer im Wohnhaus vorgesehenen Empfangseinheit der Kommunikationseinrichtung gehen muss, um mit dem Benutzer der Kommunikationseinrichtung zu kommunizieren. Die Kommunikation mit dem Benutzer von der sich vor dem Grundstückstor oder vor der Haustür befindlichen Kommunikationseinrichtung erfolgt direkt durch das Handy, das man gewöhnlich bei sich trägt, oder durch das Festnetztelefon, das gewöhnlich im Wohnhaus zentraler platziert ist als die Empfangseinheit der Kommunikationseinrichtung oder das ebenfalls mobil vorgesehen ist. Im Ergebnis ist die Kommunikation für die im Wohnhaus befindliche Person mit dem Benutzer der Kommunikationseinrichtung einfacher und bequemer.

Ein weiterer Vorteil einer Kommunikationsverbindung zwischen dem Festnetztelefon bzw. dem Handy und der Kommunikationseinrichtung besteht darin, dass für den Fall, dass sich der Benutzer des Handys außerhalb des Wohnhauses befindet, dieser beispielsweise einem vor dem Wohnhaus befindlichen Paketzusteller Weisungen bezüglich der weiteren Schritte erteilen kann. Des Weiteren bietet eine Kommunikationsverbindung zwischen dem Handy und der Kommunikationseinrichtung einen Schutz gegen Einbrecher, da die Einbrecher nicht erkennen können, ob sich deren Gesprächspartner im Wohnhaus befindet oder nicht. Ein weiterer Vorteil der Erfindung besteht darin, dass gewisse Personengruppen, wie z.B. Ärzte, A-potheker, Hausmeister, etc., durch Vorsehen eines Mobiltelefons in der Kommunikationseinrichtung sicherstellen können, dass sie immer erreichbar sind. Damit ist die Kommunikationseinrichtung auch einsetzbar in Kliniken, Behörden, Firmen und weiteren Einrichtungen.

Eine weitere vorteilhafte Ausgestaltung der Erfindung besteht darin, dass innerhalb des Gehäuses der Kommunikationseinrichtung ein Befestigungselement für das Mobiltelefon vorgesehen ist, dessen Position und Form variabel sein kann. Durch eine Veränderung der Position des Befestigungselements bzw. durch eine entsprechende Auswahl der Form des Befestigungselements können unterschiedlich ausgebildete Mobiltelefone innerhalb des Gehäuses befestigt werden. Im Ergebnis können in der Kommunikationseinrichtung unterschiedlich ausgebildete Mobiltelefone verwendet werden, was die Kommunikationseinrichtung flexibel bezüglich des verwendeten Modells und der Ausstattung des Mobiltelefons macht.

Ferner besteht eine vorteilhafte Ausgestaltung der Erfindung darin, dass die Kommunikationseinrichtung auch ein Solarmodul aufweisen kann. Das Solarmodul stellt somit auch die Stromversorgung des Mobiltelefons sicher. Im Ergebnis kann auf eine Stromleitung zur Kommunikationseinrichtung verzichtet werden.

Des Weiteren besteht eine vorteilhafte Ausgestaltung der Erfindung darin, dass im Gehäuse an der zu einer Anzeigevorrichtung des Mobiltelefons weisenden Seite eine Aussparung vorgesehen ist. Die Aussparung wird an einer Stelle des Gehäuses vorgesehen, die der Anzeigevorrichtung des Mobiltelefons gegenüberliegt. Somit sieht der Benutzer der Kommunikationseinrichtung auf einfache Weise den aktuellen Status des Mobiltelefons. So kann der Benutzer der Kommunikationseinrichtung aus der Anzeigevorrichtung beispielsweise einen Besetzzustand und/ oder den Namen der mittels des Mobiltelefons anzurufenden Person entnehmen.

Ferner besteht eine vorteilhafte Ausgestaltung der Erfindung darin, dass zusätzlich zu dem Mobiltelefon ein Lautsprecher, Mikrofon und/ oder Leistungsverstärker innerhalb des Gehäuses der Kommunikationseinrichtung vorgesehen ist. Mittels des Lautsprechers, Mikrofons und/ oder Leistungsverstärkers wird sichergestellt, dass der Benutzer der Kommunikationseinrichtung seinen Gesprächspartner problemlos kommunizieren kann. Dabei bietet die Verwendung eines Mobiltelefons den Vorteil, dass das Mobiltelefon bereits Anschlüsse bzw. Schnittstellen für ein Headset o.ä., so auch für den Lautsprecher bzw. das Mikrofon aufweist. Über diese Anschlüsse bzw. Schnittstellen kann der Lautsprecher auch mit Strom versorgt werden. Im Ergebnis wird durch eine Verwendung des Mobiltelefons erreicht, dass keine zusätzlichen Komponenten in der Kommunikationseinrichtung für eine Verbindung des Lautsprechers mit der Kommunikationseinrichtung notwendig sind.

Des Weiteren besteht eine vorteilhafte Ausgestaltung der Erfindung darin, dass innerhalb oder außerhalb des Gehäuses ein Schaltmodul zum Schalten von externen Geräten, wie beispielsweise einem Türöffner, vorgesehen ist. Das Schaltmodul ist mit dem im Gehäuse angeordneten Mobiltelefon verbunden. Wenn eine entsprechende Funktion des Mobiltelefons ausgewählt wird, z.B. ein eingehender Anruf, veranlasst das Mobiltelefon, dass das Schaltmodul ein Signal erzeugt, das an ein externes Gerät weitergegeben wird, um zum Beispiel die Tür zu öffnen. Zusätzlich ist es vorstellbar, dass eine derartige Funktion durch den Benutzer eines Handys ausgeführt wird, indem dieser beispielsweise das in dem Gehäuse vorgesehene Mobiltelefon anruft und damit die Funktion startet. Im Ergebnis wird durch das Mobiltelefon und das Schaltmodul eine einfache Steuerung beispielsweise des Türöffners erzielt.

Darüber hinaus besteht eine vorteilhafte Ausgestaltung der Erfindung darin, dass ein Mobiltelefon verwendet wird, das eine Kamera aufweist und, dass am Gehäuse der Kommunikationseinrichtung eine Ausnehmung an einer der Kamera gegenüberliegenden Stelle vorgesehen ist. Durch die Kamera und die Anzeigevorrichtung des Mobiltelefons können die beiden Gesprächspartner mittels einer Videoübertragung miteinander kommunizieren, unter der Voraussetzung, dass eine Videokommunikation bei den jeweiligen Netzbetreibern der beiden Gesprächspartner möglich ist.

Einzelheiten der Erfindung werden anhand der Zeichnungen näher erläutert, wobei identische Elemente mit den gleichen Bezugszeichen versehen sind. Dabei zeigen:
Figur 1: eine Vorderansicht einer Türsprechanlage ohne eine Vorderseite des Gehäuses.
Figur 2: eine Vorderansicht der Türsprechanlage mit einer Vorderseite des Gehäuses.

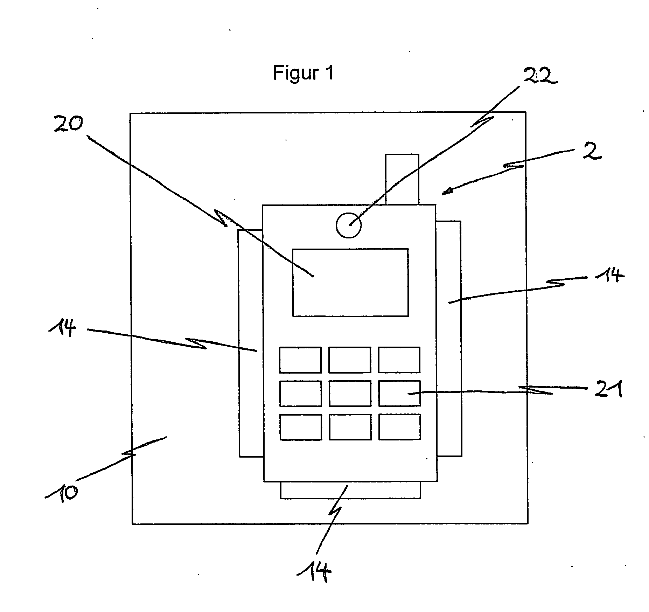

In Figur 1 wird ein Hohlraum eines Gehäuses 10 einer Kommunikationseinrichtung gezeigt, die in dieser Ausführungsform als Türsprechanlage 1 ausgebildet ist. Innerhalb des Gehäuses 10 ist ein Mobiltelefon 2 vorgesehen. Das Mobiltelefon 2 wird mittels Befestigungselementen 14, die beispielsweise als Klemmen oder Schalen ausgebildet sind, am Gehäuse 10 befestigt. Sowohl die Position der Befestigungselemente 14 als auch die Form der Befestigungselemente 14 kann an die Form und Position des Mobiltelefons 2 innerhalb des Gehäuses 10 angepasst werden.

Das Mobiltelefon 2 weist eine Anzeigevorrichtung 20, mehrere Tasten 21, einen nicht dargestellten Anschluss bzw. Schnittstelle und eine Kamera 22 auf. Der Anschluss bzw. die Schnittstelle dient zum Anschließen von externen Geräten an das Mobiltelefon 2. So kann beispielsweise ein Headset über den Anschluss bzw. die Schnittstelle oder ein Ladekabel zum Aufladen einer Batterie mit dem Mobiltelefon verbunden werden. Des Weiteren weist das Mobiltelefon 2 einen Lautsprecher, ein Mikrofon und eine SIM-Karte auf, die in den Figuren nicht gezeigt sind. Das Mobiltelefon 2 kann gegen Diebstahl und Sabotage gesichert werden, indem über die Tasten 21 des Mobiltelefons 2 eine PIN-Nummer für das Mobiltelefon 2 und die SIM-Karte eingegeben wird.

Im Mobiltelefon 2 können mehrere Rufnummern gespeichert und einzelnen Tasten 21 zugeordnet werden. Durch ein Drücken einer Taste des Mobiltelefons 2 wird durch das Mobiltelefon die der Taste zugeordnete Rufnummer angewählt. Das in Figur 1 gezeigte Tastenelement 11 ist einer einzigen Taste 21 des Mobiltelefons 2 zugeordnet. Es ist auch vorstellbar am Gehäuse 10 mehrere Tastenelemente 11 vorzusehen, die jeweils einer einzigen Taste 21 des Mobiltelefons 2 zugeordnet sind.

So ist es beispielsweise möglich auf einer ersten Taste des Mobiltelefons 2 die eigene Rufnummer des Festnetztelefons oder Handys zu hinterlegen. Des Weiteren ist es möglich auf einer zweiten Taste die Rufnummer des Nachbarn oder einer anderen Person und auf einer dritten Taste die Mailbox Rufnummer des Handys zu hinterlegen. Am Gehäuse 10 können die den einzelnen Tasten zugeordneten Personen bzw. Mailboxen genannt werden.

Bei einer in den Figuren nicht gezeigten Türsprechanlage ist zwischen den Tasten des Mobiltelefons und der am Gehäuse der Türsprechanlage vorgesehenen Tastenelemente ein Übertragungselement vorgesehen. Das Übertragungselement überträgt die bei einem Betätigen des Tastenelements auf diesen ausgeübte Druckkraft auf die jeweilige Taste des Mobiltelefons. Das Übertragungselement kann mechanisch oder elektrisch ausgebildet sein. Bei einer weiteren in Figur 1 nicht gezeigten Türsprechanlage ist in dem Gehäuse eine Aussparung vorgesehen, so dass die Tasten des Mobiltelefons direkt von außen betätigt werden können.

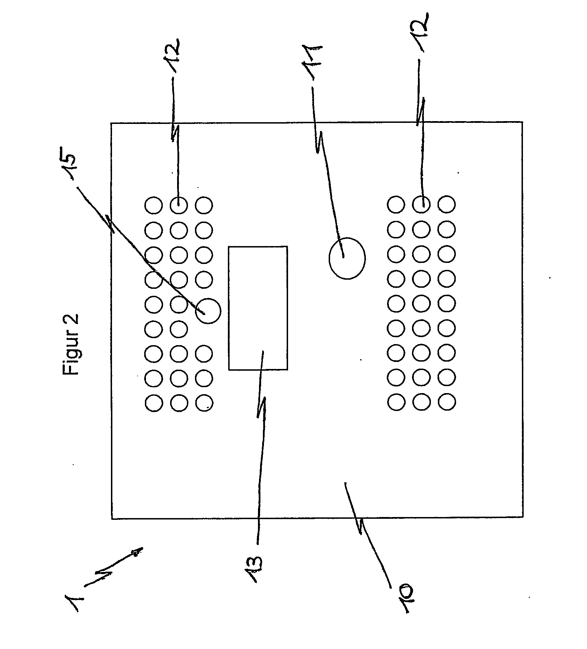

Bei der in Figur 1 gezeigten Türsprechanlage 1 weist das Gehäuse 10 eine Vorderseite auf. Als Vorderseite des Gehäuses 10 wird die Seite des Gehäuses 10 verstanden, die der in Figur 2 gezeigten Anzeigevorrichtung 20 des Mobiltelefons 2 gegenüberliegt. Die Vorderseite des Gehäuses 10 ist mittels eines in den Figuren nicht gezeigten Schlosses mit dem Gehäuse 10 befestigt. Somit wird sichergestellt, dass Unbefugte keinen Zugriff auf das innerhalb des Gehäuses 10 angeordnete Mobiltelefon 2 haben.

Gemäß Figur 2 weist das Gehäuse 10 an seiner Vorderseite eine Vielzahl von Bohrungen 12 auf. Die Bohrungen 12 sind derart angeordnet, dass sie im Bereich des Lautsprechers des Mobiltelefons 2 und im Bereich eines Mikrofons des Mobiltelefons 2 vorgesehen sind. Durch eine derartige Anordnung wird eine gute Sprachübertragungsqualität zwischen den Gesprächspartnern sichergestellt. Zusätzlich ist auf der Vorderseite des Gehäuses 10 ein Tastenelement 11 angeordnet, mittels dem eine Funktion des in Figur 2 gezeigten Mobiltelefons 2 ausgeführt werden kann. Genauer gesagt ist das Tastenelement 11 derart angeordnet, dass es einer Taste 21 des Mobiltelefons 2 gegenüberliegt. Im unbetätigten Zustand des Tastenelements 11 steht dieses nicht mit der Taste 21 des Mobiltelefons 2 in Kontakt. Für den Fall, dass das Tastenelement 11 betätigt wird, drückt das Tastenelement 11 gegen die entsprechende Taste 21 des Mobiltelefons 2 und betätigt diese.

Ferner ist auf der Vorderseite des Gehäuses 10 eine Aussparung 13 vorgesehen. Die Aussparung 13 ist derart vorgesehen, dass der Benutzer der Türsprechanlage 1 die Anzeigevorrichtung 20 des Mobiltelefons 2 erkennen kann. Ferner ist auf der Vorderseite des Gehäuses 10 eine Ausnehmung 15 an einer Stelle vorgesehen, die der am Mobiltelefon 2 vorgesehenen Kamera 22 gegenüberliegt, so dass mittels der Kamera 22 der Benutzer der Türsprechanlage 1 erfasst werden kann.

Die Abmaße des Gehäuses 10 sind an bereits bestehende Türsprechanlagen angepasst, so dass zumindest Teile der erfindungsgemäßen Türsprechanlage 1 in bereits bestehende Türsprechanlagen 1 eingebaut werden können. Die Materialien des Gehäuses 10 werden so gewählt, dass sie stoßsicher, bruchsicher und witterungsbeständig sind. Zusätzlich wird die Türsprechanlage 1 gegen Spritzwasser geschützt.

Es ist grundsätzlich vorstellbar, dass mehrere Mobiltelefone 2 in einem Gehäuse eingesetzt werden, um für große Hausanlagen verwendbar zu sein.

Im Folgenden wird der Betrieb der Türsprechanlage 1 kurz beschrieben.

Sobald der Benutzer der Türsprechanlage 1 das Tastenelement 11 drückt, wird aufgrund der Ausbildung des Tastenelements 11 die dem Tastenelement 11 zugeordnete Taste 21 des Mobiltelefons 2 gedrückt. Das Mobiltelefon 2 wählt dann die der gedrückten Taste 21 zugeordnete Rufnummer an und ermöglicht eine Kommunikation zwischen den Gesprächspartnern.

Durch die auf dem Mobiltelefon 2 angebrachte Kamera 22 wird ermöglicht, dass der Benutzer der Türsprechanlage 1 und sein Gesprächspartner mittels einer Videoübertragung miteinander kommunizieren. Dabei wird die Anzeigevorrichtung 20 des Mobiltelefons zur Videoübertragung verwendet.

Die Rufnummer oder der Name oder der Ort des im Gehäuse 10 befindlichen Mobiltelefons 2 kann in dem Festnetztelefon oder in dem Mobiltelefon hinterlegt werden. So kann der Benutzer des Festnetztelefons bzw. des Mobiltelefons durch eine entsprechende Anzeige relativ einfach erkennen, dass eine Person die Türsprechanlage 1 betätigt hat.

## Patentansprüche

1. Kommunikationseinrichtung (1) mit einem Gehäuse (10) und mindestens einem am Gehäuse (10) vorgesehenen Tastenelement (11),
wobei
innerhalb des Gehäuses (10) mindestens ein Mobiltelefon (2) vorgesehen ist, das relativ zum Tastenelement (11) so angeordnet ist, dass zumindest eine Funktion des Mobiltelefons (2) bei Betätigung des mindestens einen Tastenelements (11) ausführbar ist, indem das Tastenelement (11) eine Taste (21) des Mobiltelefons (2) betätigt,
innerhalb des Gehäuses (10) ein Befestigungselement (14) zum Befestigen des Mobiltelefons (2) vorgesehen ist, und
**dadurch gekennzeichnet, daß** Position und/oder Form des Befestigungselements (14) veränderbar ist, um sie an Form und Position des Mobiltelefons (2) innerhalb des Gehäuses (10) anzupassen.

2. Kommunikationseinrichtung (1) nach Anspruch 1, wobei statt des Tastenelements (11) eine Aussparung vorgesehen ist, die so angepasst ist, dass sie einer Taste des Mobiltelefons (2) entspricht, so dass die Taste des Mobiltelefons (2) direkt von außen betätigbar ist.

3. Kommunikationseinrichtung (1) nach einem der vorhergehenden Ansprüche, **dadurch gekennzeichnet, dass** ein Solarmodul vorgesehen ist, das mit dem Mobiltelefon (2) verbunden ist.

4. Kommunikationseinrichtung (1) nach einem der vorhergehenden Ansprüche, **dadurch gekennzeichnet, dass** das Mobiltelefon (2) eine Anzeigevorrichtung (20) aufweist und im Gehäuse (10) eine Aussparung (13) an einer Stelle vorgesehen ist, die der Anzeigevorrichtung (20) gegenüberliegt.

5. Kommunikationseinrichtung (1) nach Anspruch 4, **dadurch gekennzeichnet, dass** an der zur Anzeigevorrichtung (20) des Mobiltelefons (2) weisenden Seite des Gehäuses (10) mehrere Bohrungen (12) vorgesehen sind.

6. Kommunikationseinrichtung (1) nach einem der vorhergehenden Ansprüche, **dadurch gekennzeichnet, dass** innerhalb des Gehäuses (10) ein Lautsprecher, ein Mikrofon und/ oder ein Leistungsverstärker vorgesehen ist, der mit dem Mobiltelefon (2) verbunden ist.

7. Kommunikationseinrichtung (1) nach einem der vorhergehenden Ansprüche, **dadurch gekennzeichnet, dass** die Türsprechanlage (1) ein Schaltmodul zum Schalten von externen Geräten aufweist.

8. Kommunikationseinrichtung (1) nach einem der vorhergehenden Ansprüche, **dadurch gekennzeichnet, dass** das Mobiltelefon (2) eine Kamera (22) aufweist und in dem Gehäuse (10) eine Ausnehmung (15) an einer Stelle vorgesehen ist, die der Kamera (22) gegenüberliegt.

## Claims

1. Communication device (1) with a housing (10) and at least one key element (11) provided on the housing (10),
wherein
within the housing (10) at least one mobile phone (2) is provided that is arranged relative to the key element (11), so that at least one function of the mobile phone (2) is executable by pressing the at least one key element (11), when the key element (11) presses a key (21) of the mobile phone (2),
within the housing (10) a fastening element (14) for fastening the mobile phone (2) is provided, and
**characterized in that**
position and/or shape of the fastening element (14) is variable in order to adapt it to shape and position of the mobile phone (2) within the housing (10).

2. Communication device (1) according to claim 1, wherein instead of the key element (11) a recess is provided that is adapted so as to correspond to a key of the mobile phone (2), so that the key of the mobile phone (2) can directly be pressed from the outside.

3. Communication device (1) according to one of the preceding claims, **characterized in that** a solar module is provided, which is connected to the mobile phone (2).

4. Communication device (1) according to one of the preceding claims, **characterized in that** the mobile phone (2) has a display device (20) and **in that** in the housing (10) a recess (13) is provided at a location which is opposite to the display device (20).

5. Communication device (1) according to claim 4, **characterized in that** a plurality of bores (12) are provided on the housing (10), facing the display device (20) of the mobile phone (2) .

6. Communication device (1) according to one of the preceding claims, **characterized in that** within the housing (10) a loudspeaker, a microphone and/or a power amplifier is provided that is connected to the mobile phone (2).

7. Communication device (1) according to one of the preceding claims, **characterized in that** a switching module for switching external devices is provided in the door intercom (1).

8. Communication device (1) according to one of the preceding claims, **characterized in that** the mobile phone (2) has a camera (22) and **in that** in the housing (10) a recess (15) is provided at a location which is opposite to the camera (22).

## Revendications

1. Dispositif de communication (1) comportant un boîtier (10) et au moins un élément à touche (11) prévu sur le boîtier (10), au moins un téléphone mobile (2) étant prévu à l'intérieur du boîtier (10), lequel est disposé par rapport à l'élément à touche (11) de manière à rendre exécutable au moins une fonction du téléphone mobile (2) par actionnement de l'élément ou des éléments à touche (11), l'élément à touche (11) activant une touche (21) du téléphone mobile (2), un élément de fixation (14) étant prévu à l'intérieur du boîtier (10) pour la fixation du téléphone mobile (2), **caractérisé en ce que** la position et/ou la forme de l'élément de fixation (14) sont modifiables pour être ajustées à la forme et à la position du téléphone mobile (2) à l'intérieur du boîtier (10).

2. Dispositif de communication (1) selon la revendication 1, où, au lieu de l'élément à touche (11), il est prévu un évidement adapté de manière à correspondre à une touche du téléphone mobile (2), si bien que la touche du téléphone mobile (2) peut être directement activée de l'extérieur.

3. Dispositif de communication (1) selon l'une des revendications précédentes, **caractérisé en ce qu'**un module solaire est prévu, lequel est raccordé au téléphone mobile (2).

4. Dispositif de communication (1) selon l'une des revendications précédentes, **caractérisé en ce que** le téléphone mobile (2) comporte un dispositif d'affichage (20) et **en ce qu'**un évidement (13) est prévu dans le boitier (10) à un emplacement opposé au dispositif d'affichage (20).

5. Dispositif de communication (1) selon la revendication 4, **caractérisé en ce que** plusieurs perforations (12) sont prévues sur le côté du boîtier (10) faisant face au dispositif d'affichage (20) du téléphone mobile (2).

6. Dispositif de communication (1) selon l'une des revendications précédentes, **caractérisé en ce qu'**un haut-parleur, un microphone et/ou un amplificateur de puissance raccordés au téléphone mobile (2) sont prévus à l'intérieur du boîtier (10).

7. Dispositif de communication (1) selon l'une des revendications précédentes, **caractérisé en ce que** l'installation d'interphone de porte (1) comporte un module de commutation pour la commutation d'appareils externes.

8. Dispositif de communication (1) selon l'une des revendications précédentes, **caractérisé en ce que** le téléphone mobile (2) comporte une caméra (22) et **en ce qu'**un évidement (15) est prévu à un emplacement du boîtier (10) opposé à la caméra (22).
